# FASCICULE DE BREVET EUROPEEN

(11) **EP 3 703 998 B1**
(45) Date de publication et mention de la délivrance du brevet: **15.12.2021**
(21) Numéro de dépôt: 18779683.4
(22) Date de dépôt: 02.10.2018
(51) Int. Cl.: B62D 25/20

(54) **BOÎTIER DE SIÈGE, NOTAMMENT DE SIÈGE AVANT, D'UN VÉHICULE, ET À UNE STRUCTURE DE CAISSE INFÉRIEURE D'UN VÉHICULE AUTOMOBILE**
SITZGEHÄUSE, INSBESONDERE FÜR EINEN VORDERSITZ, EINES FAHRZEUGS, UND UNTERE KAROSSERIESTRUKTUR EINES KRAFTFAHRZEUGS
SEAT HOUSING, IN PARTICULAR FOR A FRONT SEAT, OF A VEHICLE, AND A LOWER BODY STRUCTURE OF A MOTOR VEHICLE

(30) Priorité: 30.10.2017 FR 1760238
(43) Date de publication de la demande: 09.09.2020
(73) Titulaire: Renault S.A.S., 92100 Boulogne-Billancourt (FR)
(72) Inventeur: DE ALMEIDA, Luis Filipe, 78760 Jours Pontchartrain (FR); GARNIER, Laura, 78180 Montigny le Bretonneux (FR)
(86) Numéro de dépôt international: PCT/EP2018/076741
(87) Numéro de publication internationale: WO 2019/086185

(56) Documents cités:
- JP-A- 2017 124 644
- US-A- 5 388 885
- US-A1- 2012 049 501
- US-B2- 8 292 356

## Description

La présente invention se rapporte à un boîtier de siège, notamment de siège avant, d'un véhicule, et à une structure de caisse inférieure d'un véhicule automobile.

Les véhicules automobiles comprennent usuellement un plancher bordé latéralement par un bas de caisse. Ce bas de caisse comporte un bavolet de chaque côté du véhicule. Un bavolet est un élément longitudinal, s'étendant le long du soubassement selon la direction longitudinale du véhicule, et notamment au niveau des ouvertures de portes où il forme un seuil. Le bavolet sert également de support aux pieds de la caisse, principalement au pied milieu qui est un élément longitudinal s'étendant verticalement entre le bas de caisse et le pavillon du véhicule, en formant un montant vertical à l'arrière des portes avant du véhicule, soit entre les portes avant et arrière. Le pied milieu a pour fonction d'apporter de la résistance aux chocs latéraux à la zone centrale du véhicule et préserver l'habitacle de déformations.

Le bavolet doit être capable de résister à un certain nombre de chocs, notamment latéraux. En cas de choc latéral, le bavolet est la première zone de résistance rencontrée. Il peut arriver que pour certains chocs latéraux, la résistance aux chocs du bavolet soit insuffisante et que ledit bavolet subisse une rotation ou déformation qui permette à la porte du véhicule de faire intrusion dans l'habitacle. Pour améliorer la sécurité des passagers, il convient donc d'améliorer la résistance aux chocs latéraux de cette zone du véhicule.

Dans le brevet US8292356, il est proposé de renforcer la résistance aux chocs latéraux d'un bavolet, en apportant un élément de renfort constitué de plusieurs pièces et relié au bavolet. En outre, ce renfort a aussi la fonction de boîtier de fixation du siège avant qui se dispose usuellement sur la traverse basse présente perpendiculairement au pied milieu. Ledit renfort formant boîtier est ainsi installé en appui à la fois sur la traverse sous siège et contre le bavolet.

L'invention vise à proposer un renfort de bavolet alternatif à ceux de l'art antérieur pour améliorer encore la résistance aux chocs latéraux d'un véhicule, notamment plus robuste. L'invention vise en particulier à répondre au mieux aux critères sévères de sécurité selon les crashs tests relatifs aux chocs latéraux notamment le test Euro NCAP.

A cet effet, l'invention propose un boîtier de fixation de siège d'un véhicule, apte à former renfort d'un bavolet de la structure de caisse inférieure d'un véhicule en se fixant sur une extrémité de la traverse de siège et contre ledit bavolet, qui caractérise en ce que ledit boitier de fixation de siège comprend un flasque latéral avant et un flasque latéral arrière présentant chacun une section transversale en forme sensiblement de L, et un flasque supérieur, lesdits flasques étant assemblés de sorte que ledit flasque supérieur coiffe et encadre lesdits deux flasques latéraux. Lesdits flasques sont liés de préférence par soudure.

Dans la description, sauf précisions contraires, les notions de « avant » et « arrière » sont définies par rapport aux notions classiques de « avant » et « arrière » d'un véhicule automobile. On qualifie par « intérieur » relativement au boîtier, ce qui se situe du côté intérieur du véhicule, et par « extérieur » ce qui se situe vers l'extérieur du véhicule soit vers le bavolet. Les qualificatifs de « intérieur » ou « extérieur » et de « avant » ou « arrière » relatives au boîtier se réfèrent ainsi au boîtier dans son utilisation et tel qu'il est orienté une fois installé dans le véhicule.
Les notions de « interne » ou de « externe » sont quant à elles relatives au boîtier en soi.

De préférence selon l'invention, chaque flasque latéral dudit boîtier de fixation de siège comprend :
- une paroi latérale s'étendant dans le plan vertical,
- une paroi supérieure interne disposée en prolongement du bord supérieur de ladite paroi latérale et dans un plan sensiblement normal à ladite paroi latérale, et présentant une partie intérieure sensiblement horizontale et une partie extérieure inclinée vers l'extérieur (soit en direction du bavolet), ainsi qu'une partie médiane entre ladite partie intérieure et ladite partie extérieure sensiblement courbe,
- une paroi externe verticale disposée en prolongement du bord extérieur de ladite paroi latérale et dans un plan sensiblement normal à ladite paroi latérale, ladite paroi externe étant la paroi de solidarisation avec le bavolet.

Ladite paroi externe verticale est dirigée hors du boîtier, autrement dit dirigée suivant la direction longitudinale du véhicule vers l'arrière ou l'avant du véhicule selon qu'il s'agit du flasque latéral respectivement arrière ou avant.

De préférence selon l'invention, le flasque supérieur dudit boîtier de fixation de siège comprend deux parois latérales sensiblement parallèles entre elles et s'étendant dans le plan vertical de part et d'autre d'une paroi supérieure présentant une partie intérieure sensiblement horizontale et une partie extérieure inclinée vers l'extérieur (soit en direction du bavolet), ainsi qu'une partie médiane entre ladite partie intérieure et ladite partie extérieure sensiblement courbe, et lesdites parois latérales du flasque supérieur étant emboîtées par-dessus les parois latérales des flasques latéraux pour former le boîtier. Lesdites parois latérales du flasque supérieur recouvrent partiellement les parois latérales des flasques latéraux. La paroi supérieure du flasque supérieure recouvre les parois internes des flasques latéraux.

Selon un mode de réalisation particulier de l'invention, ledit flasque supérieur dudit boîtier de fixation de siège comprend en outre une patte intérieure de fixation disposée en prolongement de la partie intérieure de sa paroi supérieure. Cette patte permet de fixer par soudure ledit boîtier à la traverse sous siège suivant la direction longitudinale dudit boîtier, ledit boitier pouvant en outre être fixé par soudure des parties inférieures de ses flasques latéraux sur la traverse de siège du véhicule.

De préférence selon l'invention, les flasques dudit boitier de fixation de siège présentent des nervures de renfort en creux ou en saillie, et en particulier suivant les zones de jonctions entre les parois qui les composent respectivement et à l'oblique sur les parois latérales des flasques latéraux. Ces nervures rigidifient la structure du boîtier.

Le boîtier de fixation de siège selon l'invention, présente une structure qui est plus robuste et rigide que les boitiers de l'art antérieur.

De préférence selon l'invention, le boîtier de fixation de siège comprend une cage de réglage du siège aidant au montage du siège, ladite cage étant montée sous le flasque supérieur du boîtier de siège et accessible à travers une ouverture traversante percée à travers ledit flasque, ladite ouverture étant de forme ovalisée suivant la direction longitudinale du véhicule. En particulier, ladite cage comprend un écrou et une platine supérieure qui se fixe sous la partie intérieure de la paroi supérieure du flasque supérieur, ladite platine étant réceptrice dudit écrou monté mobile dans la cage.

Selon un mode de réalisation avantageux de l'invention, le boîtier de fixation de siège est muni d'un tirant formant support d'enrouleur de ceinture de sécurité disposé sensiblement dans le plan vertical dont la partie inférieure est d'une forme épousant une partie de la forme du flasque supérieur dudit boitier de fixation du siège, et dont la partie supérieure est apte à être fixée sur un montant vertical du véhicule situé entre les ouvertures de portes du véhicule et reposant sur un bavolet. Ledit montant du véhicule est le pied milieu du véhicule. Ledit tirant se fixe plus particulièrement sur la doublure du pied milieu.

En particulier, la partie inférieure dudit tirant est d'une forme épousant la forme de la partie extérieure de la paroi supérieure dudit flasque supérieur, lesdites parties du tirant et du flasque étant soudées entre elles.

L'invention concerne plus particulièrement un boitier de fixation de siège avant.

L'invention concerne aussi une structure de caisse inférieure d'un véhicule comprenant de chaque côté un bavolet s'étendant le long du soubassement du véhicule selon la direction longitudinale du véhicule, et comprenant au moins un boitier de fixation de siège avant monté sur la traverse sous siège du véhicule et solidarisé à un bavolet pour former renfort contre les chocs latéraux dans la zone dudit bavolet, caractérisée en ce que ledit boitier de fixation est défini ci-dessus. En particulier ledit boîtier est monté soudé sur une extrémité de ladite traverse et contre ledit bavolet.
En particulier, ledit boitier comprend un tirant formant support d'enrouleur de ceinture de sécurité disposé sensiblement dans le plan vertical, ledit tirant étant fixé en passant par-dessus le bavolet, par fixation en sa partie inférieure sur la partie supérieure du boitier de fixation du siège et en sa partie supérieure par fixation à un montant qui est situé dans un plan vertical sensiblement perpendiculaire audit bavolet et à proximité de la traverse de siège.

L'invention concerne aussi un véhicule automobile qui comprend une structure de caisse inférieure définie ci-dessus.

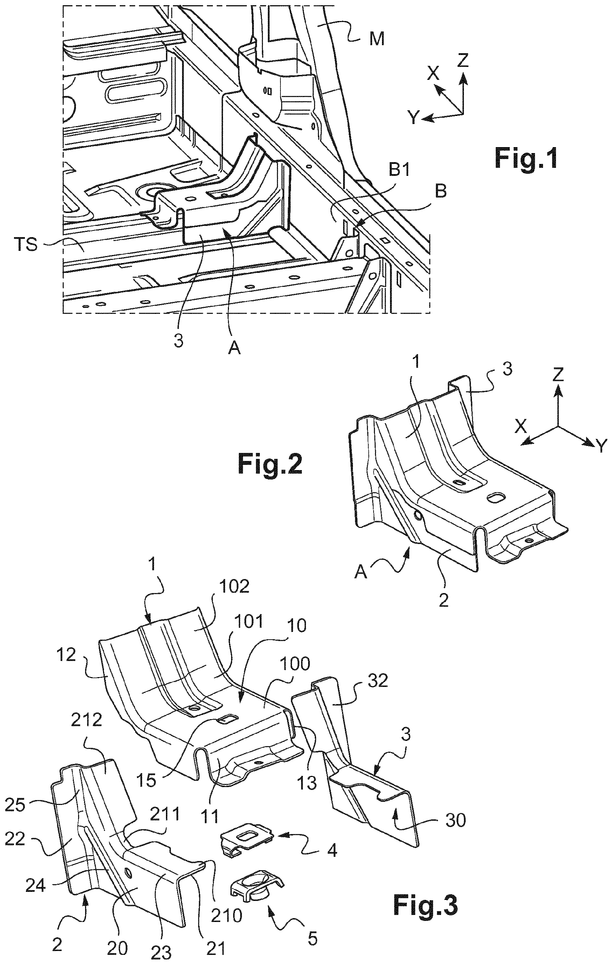

D'autres particularités et avantages de l'invention ressortiront à la lecture de la description faite ci-après de modes de réalisation particuliers de l'invention, à titre indicatif mais non limitatif, en référence aux figures 1 à annexées pour lesquelles :
- la figure 1 illustre selon une vue en perspective de trois-quarts un boîtier de fixation de siège et de renfort de bavolet selon l'invention ;
- la figure 2 illustre le boîtier de la figure 1 selon une vue en éclaté;
- la figure 3 illustre selon une vue partielle et en perspective, un côté de bas de caisse d'un véhicule équipé du boîtier des figures 1 et 2;
- la figure 4 illustre selon une vue en perspective de trois-quarts un boîtier de fixation de siège et de renfort de bavolet comprenant un tirant de support enrouleur de ceinture de sécurité selon l'invention ;
- la figure 5 illustre selon une vue partielle et en perspective, un côté de bas de caisse d'un véhicule équipé du boîtier représenté en figure 4.

Dans la suite de la description, il est fait référence à un repère XYZ, dans lequel X est la direction longitudinale avant-arrière du véhicule, orientée vers l'arrière, Y est la direction transversale orientée vers la droite du véhicule, et Z est la direction verticale orientée vers le haut du véhicule.

La figure 1 illustre selon une vue partielle un côté d'une partie inférieure de carrosserie d'un véhicule, autrement dit d'un bas de caisse ou soubassement, en l'occurrence le côté gauche et avant d'un véhicule. Ce bas de caisse comporte un bavolet B s'étendant le long du soubassement selon la direction longitudinale X du véhicule, et notamment au niveau des ouvertures de portes où il forme un seuil. Il est formé classiquement selon cet exemple de deux profilés longitudinaux à section en U, accolés en regard l'un de l'autre, l'un disposé du côté extérieur du véhicule et l'autre disposé vers l'intérieur, du côté du plancher P et relié à ce dernier. Le bavolet sert également de support au pied milieu M de la caisse qui s'étend verticalement entre le bas de caisse et le pavillon du véhicule, en formant un montant vertical entre les ouvertures de portes avant et arrière.

Le bas de caisse comporte une ou deux traverses de siège située(s) en dessous de chaque siège situé dans l'habitacle du véhicule. La traverse de siège supporte classiquement des rails de guidage longitudinaux (non représentés) du siège associé et participe à la tenue mécanique de la structure du bas de caisse en cas de choc latéral notamment. La traverse de siège est formée d'une poutre disposée selon la direction transversale Y du véhicule. La traverse de siège prend appui du côté latéral du véhicule sur le bavolet B, et du côté central du véhicule sur d'autres éléments de structure non représentés, par exemple un tunnel central longitudinal.

Sur la traverse de siège TS illustrée à la figure 1, est emboîté et fixé par soudure un boîtier de fixation de siège 1. Ledit boîtier 1 est également fixé par soudure contre le bavolet B pour renforcer mécaniquement cette zone du véhicule.

Le boîtier de fixation de siège formant renfort du bavolet est illustré seul, selon une vue en perspective sur la figure 2 et une vue en éclaté sur la figure 3.
Ledit boitier comprend trois flasques : un flasque central supérieur 1, et deux flasques latéraux qui forment un flasque latéral avant 3 et un flasque latéral arrière 2. Lesdits flasques latéraux présentent chacun une section transversale sensiblement en forme de L. Les trois flasques sont assemblés de sorte que ledit flasque supérieur 1 coiffe et encadre lesdits deux flasques latéraux 2, 3, ledit ensemble de flasques étant monté sur la partie supérieure de ladite traverse de siège TS et en une extrémité de ladite traverse TS pour le lier à la face intérieure dudit bavolet B.

Le flasque latéral arrière 2 comprend une paroi latérale 20 s'étendant dans le plan vertical, se disposant le plus à l'arrière quand ledit boîtier est monté selon cet exemple de la figure 1. Ladite paroi latérale présente une partie intérieure droite dans le plan vertical et s'étend en équerre en sa partie extérieure. Cette paroi latérale 20 forme une barre de la forme sensiblement en L de la section du flasque. Il comprend aussi une paroi interne 21, supérieure, qui prolonge le bord supérieur de ladite paroi latérale et dans un plan sensiblement normal à ladite paroi latérale 20. Cette paroi interne 21 forme l'autre barre de la forme sensiblement en L de la section du flasque latéral. Cette paroi interne 21 présente une partie intérieure 210, orientée vers l'intérieur du véhicule, sensiblement horizontale, et une partie extérieure 212 inclinée par rapport au plan vertical en direction du bavolet B, ainsi qu'une partie médiane 211, entre ladite partie intérieure 210 et ladite partie extérieure 212, qui est sensiblement courbe et très échancrée pour laisser peu de matière dans cette zone. Ledit flasque 2 comprend en outre une paroi externe verticale 22, dirigée vers l'arrière du véhicule selon l'exemple de la figure 1, venant en prolongement du bord extérieur de ladite paroi latérale 20 et dans un plan sensiblement normal à ladite paroi latérale. Ladite paroi externe 22 est solidarisée à la face intérieure du bavolet B venant en regard de ladite paroi externe 22 du boîtier.

Plusieurs nervures de raidissement sont présentes sur le flasque latéral : une nervure 23 suit l'arête de jonction entre la paroi latérale 20 et la paroi interne 21 dudit flasque, une autre nervure 25 suit l'arête de jonction entre la paroi latérale 20 et la paroi externe 22 dudit flasque, et une nervure 24 est disposée à l'oblique sur la face de la paroi latérale 20 depuis la nervure précédente 25.

Le flasque latéral avant 3 est composé de parois et de nervures de manière symétrique au flasque arrière 2, dont une paroi externe verticale 32 dirigée vers l'avant du véhicule selon l'exemple de la figure 1.

Le flasque supérieur 1 dudit boîtier de fixation de siège comprend deux parois latérales 20, 30, sensiblement parallèles entre elles et s'étendant dans le plan vertical de part et d'autre perpendiculairement à une paroi supérieure 10, chaque paroi latérale ayant une partie intérieure droite dans le plan vertical et une partie extérieure inclinée. Ladite paroi supérieure 10 présente une partie intérieure 100, sensiblement horizontale, et une partie extérieure 102, inclinée par rapport au plan vertical en direction du bavolet B. Ladite paroi supérieure 10 présente aussi une partie médiane 101, entre ladite partie intérieure 100 et ladite partie extérieure 102, qui est sensiblement courbe. Ladite paroi supérieure 10 se prolonge intérieurement et vers le bas par une patte intérieure 11 de liaison avec la traverse de siège TS.

Ledit flasque supérieur présente plusieurs nervures de raidissement : des nervures suivant ses différentes arêtes, notamment suivant les arêtes de jonction entre les différentes parois qui le composent, ainsi que des nervures positive et négative sur sa paroi supérieure 10.

Lesdites parois latérales du flasque supérieur ayant une forme épousant sensiblement la forme des flasques latéraux avant et arrière, s'emboîtent par-dessus les parois latérales desdits flasques latéraux, sans recouvrir entièrement ces derniers, pour former le boîtier illustré en figure 2. Les différents flasques sont solidarisés ensemble par soudure.

Le boîtier est soudé contre le bavolet, sur la face intérieure B1 du bavolet, en la paroi externe verticale 22 du flasque arrière 2, dirigée vers l'arrière du véhicule selon l'exemple de la figure 1, et en la paroi externe verticale 32 du flasque avant 3, dirigée vers l'avant du véhicule selon l'exemple de la figure 1.

Par ailleurs, la paroi supérieure 10 du flasque central supérieur 1 présente un perçage formant un orifice ovalisé 15 suivant la direction longitudinale du véhicule, qui donne accès à une cage de réglage du siège aidant au montage du siège. Ladite cage de réglage, de manière connue en soi, présente une platine 4 qui se fixe par soudure sous ledit flasque supérieur 1, et réceptrice d'un écrou 5 monté mobile dans ladite platine 4, formant ainsi une cage flottante. Le rail de siège est disposé sur le flasque supérieur 1 et est vissé à travers l'orifice 15 dudit flasque 1, à l'aide de la cage de réglage 4, 5.

Le boîtier de fixation de siège selon l'invention, présente une structure qui est plus robuste et rigide que les boitiers de l'art antérieur. Il permet efficacement d'empêcher la rotation du bavolet en cas de choc latéral et ainsi permet d'éviter à la porte de faire intrusion dans l'habitacle. L'invention permet de cumuler la fonction de fixation de siège avec la fonction de renfort de bavolet contre un choc latéral et ainsi de proposer une solution qui se traduit par un gain économique (assemblage, logistique...) et ce sans augmenter le poids de la plateforme. Ceci participe à la diminution des taux d'émission des gaz réglementaires (CO2, N0x, particules) tout en améliorant la sécurité des passagers.

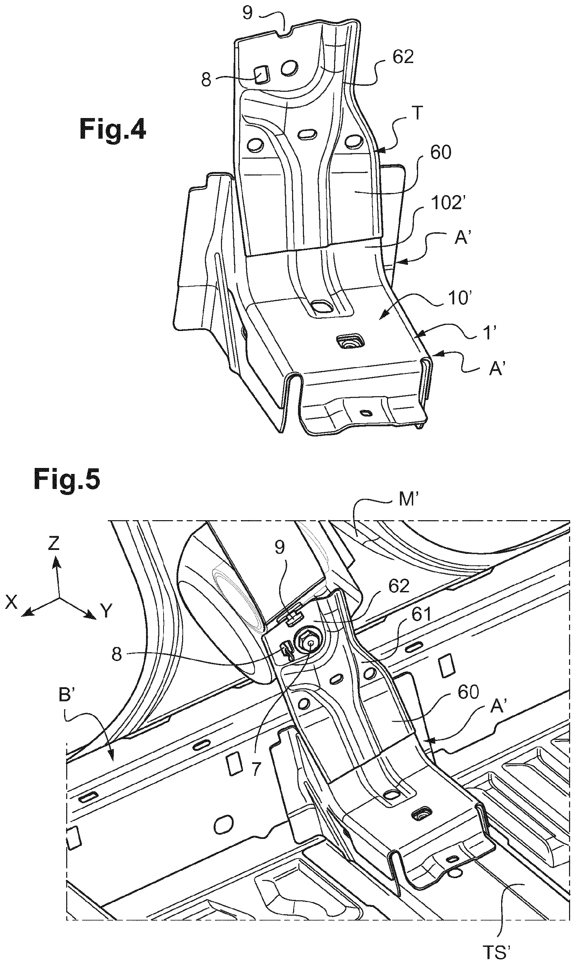

La figure 4 illustre selon une vue en perspective un mode avantageux de réalisation de l'invention, selon lequel le boîtier de siège formant renfort du bavolet est équipé d'un tirant formant support d'enrouleur de ceinture de sécurité. La figure 5 illustre selon une vue en perspective et partielle un côté d'une partie inférieure d'un véhicule, en l'occurrence le côté gauche et avant d'un véhicule. Un boîtier de fixation de siège A' est muni dudit tirant T, ledit boîtier étant fixé contre le bavolet B' et sur la traverse de siège TS', et ledit tirant T étant fixé en son extrémité supérieure sur la doublure de pied milieu formant le montant M' entre les ouvertures des portes latérales du véhicule. Le boitier M' est conçu de manière identique au boitier M qui vient d'être décrit ci-dessus. La paroi supérieure 10' du flasque supérieur 1' dudit boîtier M' est la paroi réceptrice du tirant T. Plus précisément c'est la face externe de la partie supérieure inclinée 102' de ladite paroi 10' qui est réceptrice de la partie inférieure dudit tirant T. Le tirant T formant support d'enrouleur de ceinture de sécurité, est constitué d'une plaque dont la partie inférieure 60 a une forme qui épouse la forme de la partie inclinée 102' du flasque supérieur 1 dudit boîtier. Cette partie inférieure 60 du tirant est disposée de manière à recouvrir la partie supérieure 102' de la paroi supérieure 10' dudit flasque supérieur 1 et elle est y fixée par soudure. La partie supérieure 62 dudit tirant T est fixée par une vis 7 qui sert également à fixer l'enrouleur de ceinture de sécurité sur le tirant T. Ladite partie supérieure 62 du tirant présente en outre des ouverture 8 et encoche 9 réceptrices de l'enrouleur de ceinture de sécurité. La partie intermédiaire 61 dudit tirant, située entre les parties supérieure 62 et inférieure 60, est configurée pour passer par dessus le bavolet B', sans y être fixée. Cette partie intermédiaire présente notamment une courbure permettant audit tirant de s'étendre dudit boîtier à la partie inférieure du montant M', juste au-dessus du bavolet. Ledit tirant T présente des nervures de raidissement, celles en sa partie inférieure épousant celles de la partie supérieure 102' de la paroi supérieure du flasque supérieur 1.

Le boîtier et le tirant présentent en outre divers orifices pour le passage d'outils et des moyens de soudure.

Ledit boîtier est équipé du tirant formant support d'enrouleur de ceinture de sécurité afin d'optimiser la résistance aux chocs de la zone latérale du bas de caisse d'un véhicule, plus particulièrement au niveau des portes latérales, en conjuguant le renfort mécanique apporté par ledit boîtier per se et le renfort mécanique apporté par ledit tirant contre les chocs latéraux et longitudinaux que peut subir le véhicule.

## Revendications

1. Boîtier de fixation de siège d'un véhicule( A, A'), apte à former renfort d'un bavolet (B, B') de la structure de caisse inférieure d'un véhicule en se fixant sur une extrémité d'une traverse de siège (TS, TS') et contre ledit bavolet (B, B'), **caractérisé en ce que** ledit boitier de fixation de siège (A) comprend un flasque latéral avant (3) et un flasque latéral arrière (2) présentant chacun une section transversale en forme sensiblement de L, et un flasque supérieur (1), lesdits flasques étant assemblés de sorte que ledit flasque supérieur (1) coiffe et encadre lesdits deux flasques latéraux (2,3), lesdits flasques étant liés de préférence par soudure.

2. Boîtier de fixation de siège selon la revendication 2, **caractérisé en ce que** chaque flasque latéral (1, 2) dudit boîtier de fixation de siège comprend :
- une paroi latérale (20) s'étendant dans le plan vertical,
- une paroi supérieure interne (21) disposée en prolongement du bord supérieur de ladite paroi latérale (20) et dans un plan sensiblement normal à ladite paroi latérale (20) , et présentant une partie intérieure (210) sensiblement horizontale et une partie extérieure (212) inclinée vers l'extérieur, ainsi qu'une partie médiane (211) entre ladite partie intérieure et ladite partie extérieure sensiblement courbe,
- une paroi externe verticale (22) disposée en prolongement du bord extérieur de ladite paroi latérale (20) et dans un plan sensiblement normal à ladite paroi latérale (20), ladite paroi externe étant la paroi de solidarisation avec le bavolet.

3. Boîtier de fixation de siège selon l'une des revendications 1 à 3, **caractérisé en ce que** le flasque supérieur (1) dudit boîtier de fixation de siège comprend deux parois latérales (12, 13) , sensiblement parallèles entre elles et s'étendant dans le plan vertical de part et d'autre d'une paroi supérieure (10) présentant une partie intérieure (100) sensiblement horizontale et une partie extérieure (102) inclinée vers l'extérieur, ainsi qu'une partie médiane (101) entre ladite partie intérieure et ladite partie extérieure sensiblement courbe, et lesdites parois latérales (12, 13) du flasque supérieur étant emboîtées par-dessus les parois latérales (20, 30) respectives des flasques latéraux (2, 3) pour former le boîtier.

4. Boîtier de fixation de siège selon l'une des revendications 1 à 3, **caractérisé en ce que** ledit flasque supérieur dudit boîtier de fixation de siège comprend une patte intérieure (11) disposée en prolongement de la partie intérieure (100 de sa paroi supérieure (10).

5. Boîtier de fixation de siège selon l'une des revendications 1 à 4, **caractérisé en ce que** les flasques (1, 2, 3) dudit boitier de fixation de siège présentent des nervures de renfort en creux ou en saillie, et en particulier des nervures (23) suivant les zones de jonctions entre les parois qui les composent respectivement et à l'oblique (24) sur les parois latérales des flasques latéraux.

6. Boîtier de fixation de siège selon l'une des revendications 1 à 5, **caractérisé en ce que** ledit boîtier de fixation de siège comprend une cage de réglage du siège aidant au montage du siège, ladite cage (4, 5) étant montée sous le flasque supérieur (1) du boîtier de siège et accessible à travers une ouverture traversante (15) percée à travers ledit flasque, ladite ouverture étant de forme ovalisée suivant la direction longitudinale du véhicule.

7. Boîtier de fixation de siège selon la revendication 6, **caractérisé en ce que** ladite cage comprend un écrou (5) et une platine supérieure (4) qui se fixe sous la partie intérieure (100) de la paroi supérieure du flasque supérieur, ladite platine étant réceptrice dudit écrou monté mobile dans la cage.

8. Boîtier de fixation de siège selon l'une des revendications 1 à 7, **caractérisé en ce qu'**il est muni d'un tirant (t) formant support d'enrouleur de ceinture de sécurité disposé sensiblement dans le plan vertical dont la partie inférieure (60) est d'une forme épousant une partie de la forme du flasque supérieur (1) dudit boitier de fixation du siège, et dont la partie supérieure (62) est apte à être fixée sur un montant (M') vertical du véhicule situé entre les ouvertures de portes du véhicules et reposant sur un bavolet (B').

9. Boîtier de fixation de siège selon la revendication 8, **caractérisé en ce que** la partie inférieure (60) dudit tirant est d'une forme épousant la forme de la partie extérieure (102) de la paroi supérieure (10) dudit flasque supérieur (1), lesdites parties du tirant et du flasque étant soudées entre elles.

10. Structure de caisse inférieure d'un véhicule comprenant de chaque côté un bavolet (B, B') s'étendant le long du soubassement du véhicule selon la direction longitudinale du véhicule, et comprenant au moins un boitier de fixation de siège avant (A, A') monté sur la traverse sous siège (TS, TS') du véhicule et solidarisé à un bavolet pour former renfort contre les chocs latéraux dans la zone dudit bavolet, **caractérisée en ce que** ledit boitier de fixation est défini à l'une des revendications 1 à 9, ledit boîtier étant monté soudé sur une extrémité de ladite traverse et contre ledit bavolet.

11. Structure de caisse inférieure d'un véhicule selon la revendication 10, **caractérisée en ce que** ledit boitier comprend un tirant(T) formant support d'enrouleur de ceinture de sécurité disposé sensiblement dans le plan vertical tel que défini aux revendication 8 ou 9, ledit tirant étant fixé en passant par-dessus le bavolet, par fixation en sa partie inférieure (60) sur la partie supérieure du boitier de fixation du siège et en sa partie supérieure (62) par fixation à un montant qui est situé dans un plan vertical sensiblement perpendiculaire audit bavolet et à proximité de la traverse de siège.

12. Véhicule automobile **caractérisé en ce qu'**il comprend une structure de caisse inférieure définie à l'une des revendications 10 ou 11.

## Patentansprüche

1. Gehäuse (A, A') zur Befestigung eines Fahrzeugsitzes, das dazu geeignet ist, eine Verstärkung einer Schürze (B, B') der unteren Karosseriestruktur des Fahrzeugs zu bilden, indem es an einem Ende eines Sitzquerträgers (TS, TS') und gegen die Schürze (B, B') befestigt ist, **dadurch gekennzeichnet, dass** das Sitzbefestigungsgehäuse (A) eine vordere Seitenblende (3) und eine hintere Seitenblende (2), die jeweils einen im Wesentlichen L-förmigen Querschnitt aufweisen, sowie eine obere Blende (1) aufweist, wobei die Blenden so montiert sind, dass die obere Blende (1) die beiden Seitenblenden (2, 3) bedeckt und einfasst, wobei die Blenden vorzugsweise durch Schweißen verbunden sind.

2. Sitzbefestigungsgehäuse nach Anspruch 2, **dadurch gekennzeichnet, dass** jede Seitenblende (1, 2) des Sitzbefestigungsgehäuses Folgendes umfasst:
- eine Seitenwand (20), die sich in der vertikalen Ebene erstreckt,
- eine obere Innenwand (21), die in der Verlängerung der oberen Kante der Seitenwand (20) und in einer zur Seitenwand (20) im Wesentlichen senkrechten Ebene angeordnet ist und einen im Wesentlichen horizontalen Innenteil (210) und einen nach außen geneigten Außenteil (212) sowie einen im Wesentlichen gekrümmten Mittelteil (211) zwischen dem Innenteil und dem Außenteil aufweist,
- eine vertikale Außenwand (22), die in der Verlängerung der Außenkante der Seitenwand (20) und in einer zur Seitenwand (20) im Wesentlichen senkrechten Ebene angeordnet ist, wobei die Außenwand die Wand zur Verbindung mit der Schürze ist.

3. Sitzbefestigungsgehäuse nach einem der Ansprüche 1 bis 3, **dadurch gekennzeichnet, dass** die obere Blende (1) des Sitzbefestigungsgehäuses zwei Seitenwände (12, 13) umfasst, die im Wesentlichen parallel zueinander sind und sich in der vertikalen Ebene zu beiden Seiten einer oberen Wand (10) erstrecken, die einen im Wesentlichen horizontalen Innenteil (100) und einen nach außen geneigten Außenteil (102) sowie einen im Wesentlichen gekrümmten Mittelteil (101) zwischen dem Innenteil und dem Außenteil aufweist, und wobei die Seitenwände (12, 13) der oberen Blende über die jeweiligen Seitenwände (20, 30) der Seitenblenden (2, 3) gepasst sind, um das Gehäuse auszubilden.

4. Sitzbefestigungsgehäuse nach einem der Ansprüche 1 bis 3, **dadurch gekennzeichnet, dass** die obere Blende des Sitzbefestigungsgehäuses eine Innenlasche (11) umfasst, die in der Verlängerung des Innenteils (100) von seiner oberen Wand (10) angeordnet ist.

5. Sitzbefestigungsgehäuse nach einem der Ansprüche 1 bis 4, **dadurch gekennzeichnet, dass** die Blenden (1, 2, 3) des Sitzbefestigungsgehäuses vertiefte oder vorstehende Verstärkungsrippen und insbesondere Rippen (23) entlang der Verbindungszonen zwischen den Wänden, aus denen sie jeweils zusammengesetzt sind, und schräg (24) an den Seitenwänden der Seitenblenden aufweisen.

6. Sitzbefestigungsgehäuse nach einem der Ansprüche 1 bis 5, **dadurch gekennzeichnet, dass** das Sitzbefestigungsgehäuse einen Sitzeinstellkäfig umfasst, der die Montage des Sitzes unterstützt, wobei der Käfig (4, 5) unter der oberen Blende (1) des Sitzgehäuses montiert und über eine durch die Blende gebohrte Durchgangsöffnung (15) zugänglich ist, wobei die Öffnung in Längsrichtung des Fahrzeugs oval ist.

7. Sitzbefestigungsgehäuse nach Anspruch 6, **dadurch gekennzeichnet, dass** der Käfig eine Mutter (5) und eine obere Platte (4) umfasst, die unter dem Innenteil (100) der oberen Wand der oberen Blende befestigt ist, wobei die Platte die Mutter aufnimmt, die beweglich im Käfig montiert ist.

8. Sitzbefestigungsgehäuse nach einem der Ansprüche 1 bis 7, **dadurch gekennzeichnet, dass** es mit einem Zugelement (t) versehen ist, das eine im Wesentlichen in der vertikalen Ebene angeordnete Halterung für einen Sicherheitsgurtaufroller bildet, dessen unterer Teil (60) eine Form aufweist, die einem Teil der Form der oberen Blende (1) des Sitzbefestigungsgehäuses entspricht, und dessen oberer Teil (62) dazu geeignet ist, an einem vertikalen Pfosten (M') des Fahrzeugs, der sich zwischen den Türöffnungen des Fahrzeugs befindet und auf einer Schürze (B') aufliegt, befestigt zu sein.

9. Sitzbefestigungsgehäuse nach Anspruch 8, **dadurch gekennzeichnet, dass** der untere Teil (60) des Zugelements eine Form aufweist, die der Form des Außenteils (102) der oberen Wand (10) der oberen Blende (1) entspricht, wobei die Teile des Zugelements und der Blenden miteinander verschweißt sind.

10. Untere Karosseriestruktur eines Fahrzeugs, umfassend auf jeder Seite eine Schürze (B, B'), die sich entlang des Unterbodens des Fahrzeug in der Längsrichtung des Fahrzeugs erstreckt und zumindest ein Vordersitzbefestigungsgehäuse (A, A') umfasst, das am Untersitzquerträger (TS, TS') des Fahrzeugs angebracht und fest mit einer Schürze verbunden ist, um eine Verstärkung gegen einen seitlichen Aufprall im Bereich der Schürze auszubilden, **dadurch gekennzeichnet, dass** das Befestigungsgehäuse in einem der Ansprüche 1 bis 9 definiert ist, wobei das Gehäuse an einem Ende des Querträgers und gegen die Schürze geschweißt montiert ist.

11. Untere Karosseriestruktur eines Fahrzeugs nach Anspruch 10, **dadurch gekennzeichnet, dass** das Gehäuse ein Zugelement (T) umfasst, das eine im Wesentlichen in der vertikalen Ebene angeordnete Halterung für einen Sicherheitsgurtaufroller bildet, wie in Anspruch 8 oder 9 definiert, wobei das Zugelement über die Schürze verlaufend befestigt ist, indem es in seinem unteren Teil (60) am oberen Teil des Sitzbefestigungsgehäuses und in seinem oberen Teil (62) an einem Pfosten befestigt ist, der sich in einer vertikalen, zur Schürze im Wesentlichen senkrechten Ebene und in der Nähe des Sitzquerträgers befindet.

12. Kraftfahrzeug, **dadurch gekennzeichnet, dass** es die untere Karosseriestruktur nach einem der Ansprüche 10 oder 11 umfasst.

## Claims

1. Vehicle seat attachment housing (A, A') suitable for forming a reinforcement for a door sill (B, B') of the lower body structure of a vehicle by being attached to one end of a seat crossmember (TS, TS') and against said door sill (B, B'), **characterized in that** said seat attachment housing (A) comprises a front side flange (3) and a rear side flange (2) that each have a substantially L-shaped cross section, and an upper flange (1), said flanges being assembled in such a way that said upper flange (1) tops and frames said two side flanges (2, 3), said flanges being connected preferably by welding.

2. Seat attachment housing according to Claim 2, **characterized in that** each side flange (1, 2) of said seat attachment housing comprises:
- a side wall (20) extending in the vertical plane,
- an inner upper wall (21) arranged so as to extend the upper edge of said side wall (20) and in a plane substantially normal to said side wall (20), and having a substantially horizontal inner portion (210) and an outwardly inclined outer portion (212), as well as a median portion (211) between said inner portion and said outer portion that is substantially curved,
- a vertical outer wall (22) arranged so as to extend the outer edge of said side wall (20) and in a plane substantially normal to said side wall (20), said outer wall being the wall for securing to the door sill.

3. Seat attachment housing according to one of Claims 1 to 3, **characterized in that** the upper flange (1) of said seat attachment housing comprises two side walls (12, 13) that are substantially parallel to one another and extend in the vertical plane on either side of an upper wall (10) having a substantially horizontal inner portion (100) and an outwardly inclined outer portion (102), as well as a median portion (101) between said inner portion and said outer portion that is substantially curved, and said side walls (12, 13) of the upper flange being nested over the respective side walls (20, 30) of the side flanges (2, 3) so as to form the housing.

4. Seat attachment housing according to one of Claims 1 to 3, **characterized in that** said upper flange of said seat attachment housing comprises an inner tab (11) arranged so as to extend the inner portion (100) of its upper wall (10).

5. Seat attachment housing according to one of Claims 1 to 4, **characterized in that** the flanges (1, 2, 3) of said seat attachment housing have recessed or protruding reinforcing ribs, and in particular ribs (23) along the junction regions between their respective constituent walls, and obliquely (24) on the side walls of the side flanges.

6. Seat attachment housing according to one of Claims 1 to 5, **characterized in that** said seat attachment housing comprises a seat adjustment cage that helps in mounting the seat, said cage (4, 5) being mounted beneath the upper flange (1) of the seat housing and being accessible through a through-opening (15) created through said flange, said opening being approximately oval in shape along the longitudinal direction of the vehicle.

7. Seat attachment housing according to Claim 6, **characterized in that** said cage comprises a nut (5) and an upper plate (4) which attaches beneath the inner portion (100) of the upper wall of the upper flange, said plate serving to receive said nut that is mounted so as to be able to move in the cage.

8. Seat attachment housing according to one of Claims 1 to 7, **characterized in that** it is provided with a tie member (t) that forms a support for a safety belt reel and is arranged substantially in the vertical plane, its lower portion (60) having a shape that matches a portion of the shape of the upper flange (1) of said seat attachment housing, and its upper portion (62) being suitable for being attached to a vertical upright (M') of the vehicle located between the door openings of the vehicle and resting on a door sill (B').

9. Seat attachment housing according to Claim 8, **characterized in that** the lower portion (60) of said tie member has a shape that matches the shape of the outer portion (102) of the upper wall (10) of said upper flange (1), said portions of the tie member and of the flange being welded to one another.

10. Lower body structure of a vehicle comprising on each side a door sill (B, B') extending along the understructure of the vehicle in the longitudinal direction of the vehicle, and comprising at least one front seat attachment housing (A, A') mounted on the under-seat crossmember (TS, TS') of the vehicle and secured to a door sill in order to form a reinforcement against side impacts in the region of said door sill, **characterized in that** said attachment housing is defined in one of Claims 1 to 9, said housing being mounted welded onto an end of said crossmember and against said door sill.

11. Lower body structure of a vehicle according to Claim 10, **characterized in that** said housing comprises a tie member (T) that forms a support for a safety belt reel and is arranged substantially in the vertical plane as defined in Claim 8 or 9, said tie member being attached by passing above the door sill, having its lower portion (60) attached to the upper portion of the seat attachment housing, and having its upper portion (62) attached to an upright that is located in a vertical plane substantially perpendicular to said door sill and close to the seat crossmember.

12. Motor vehicle, **characterized in that** it comprises a lower body structure defined in one of Claims 10 and 11.
